# EUROPÄISCHE PATENTSCHRIFT

(11) **EP 1 248 026 B1**
(45) Veröffentlichungstag und Bekanntmachung des Hinweises auf die Patenterteilung: **30.08.2006**
(21) Anmeldenummer: 02090108.8
(22) Anmeldetag: 12.03.2002
(51) Int. Cl.: F16K 3/26, F16K 11/07

(54) **Anordnung zur Konservierung von Bauteilen durch Aufspritzen eines erhitzten Wachses**
Arrangement for preservation of components by injection of a heated wax
Ensemble pour la conservation de composants par l'injection de cire chaude

(30) Priorität: 27.03.2001 DE 10115963
(43) Veröffentlichungstag der Anmeldung: 09.10.2002
(73) Patentinhaber: Volkswagen AG, 38436 Wolfsburg (DE)
(72) Erfinder: Klinge, Detlev, 38108 Braunschweig (DE)
(74) Vertreter: Schneider, Henry

(56) Entgegenhaltungen:
- EP-A- 0 545 486
- CH-A- 425 382
- DE-A- 19 507 919
- DE-C- 4 317 628
- GB-A- 687 637
- GB-A- 831 611
- GB-A- 1 380 856
- PATENT ABSTRACTS OF JAPAN vol. 008, no. 128 (M-302), 14. Juni 1984 (1984-06-14) & JP 59 029879 A (ENU TEE SHII KOGYO KK), 17. Februar 1984 (1984-02-17)

## Beschreibung

Die Erfindung betrifft eine Anordnung zur Konservierung von Bauteilen durch Aufbringen eines erhitzten Wachses, insbesondere für die Hohlraumkonservierung von Karosserieteilen von Kraftfahrzeugen, mit den im Oberbegriff des Anspruchs 1 genannten Merkmalen.

Eine derartige Anordnung ist aus der Druckschrift DE 4317628 bekannt.

Es ist bekannt, die Konservierung von Bauteilen durch Aufbringen eines erhitzten Wachses, insbesondere eine Hohlraumkonservierung von Karosserieteilen von Kraftfahrzeugen, in so genannten Flutbecken durchzuführen. Die Konservierung dient zum Oberflächenschutz der verwendeten Materialien und verhindert somit ein Einwirken von aggressiven Medien auf die entsprechenden Bauteile, wodurch eine Korrosion und Oxidation des eingesetzten Materials verringert wird. Die Flutbecken haben dabei die Aufgabe, das bei der Konservierung der Kraftfahrzeugkarosserien abtropfende Wachs aufzufangen und einem Vorratsbehälter zurückzuführen. Das Aufbringen des erhitzen Wachses in die Hohlräume der Fahrzeugkarosserien erfolgt durch Druck mittels einer Düse. Das zu verarbeitende Wachs wird in einem außerhalb des Flutbeckens angeordneten Behälter auf die entsprechende Verarbeitungstemperatur aufgeheizt. Dabei sind, entsprechend den jeweilig vorhandenen Arbeitsstationen zur Hohlraumkonservierung, mehrere Behälter um das Flutbecken angeordnet. Die Behälter zur Aufheizung des Wachses sind doppelwandig ausgeführt und werden durch Heißwasser beheizt, um ein Erstarren des Wachses bei Temperaturen unter 60 °C zu verhindern. Die Behälter haben vom Behälterboden eine Verbindung über beheizte Rohre und Schlauchleitungen zu den Flutstellen, in denen das Wachs in die zu konservierenden Hohlräume der Fahrzeugkarosserien gespritzt wird. Zur Vermeidung eines Erstarrens des Wachses während des Spritzvorganges werden Flutbecken und die Flutstellen ebenfalls zusätzlich beheizt. Dabei sind in den Wandungen des Flutbeckens Rohre eingelassen, in denen zur Beheizung des Flutbeckens Heißwasser durchgeführt wird. Ebenso werden die Flutstellen durch Anordnung von Heißwasserrohren zusätzlich beheizt.

Die mengenmäßige Zuführung des Wachses zu den Flutstellen wird über in den Leitungen angeordnete Ventile gesteuert. Nach dem Fluten werden die Behälter aus einer um das Becken angeordneten Ringleitung wieder mit Wachs aufgefüllt. Das Befüllen wird mit einem pneumatisch angetriebenen Kugelhahn gesteuert. Für den Flutvorgang wird der Behälter mit Druckluft beaufschlagt und der so entstehende Überdruck drückt das Wachs über die untere Rohrleitung in die Schlauchleitung zur Flutstelle. Nach dem Fluten wird das Ventil entlüftet und das Wachs läuft in den Behälter zurück. Das entnommene Wachs wird über die Ringleitung wieder nachgefüllt. Die Entnahme und der Füllstand werden mit Niveausonden kontrolliert und gesteuert.

Die Ventile zur Regelung der den Flutstellen zugeführten Wachsmengen bestehen dabei aus einem verstellbaren konischen Schließelement und einem entsprechend dazu ausgebildeten Dichtelement. Durch Verstellung des freien Öffnungsquerschnitts durch die Verschiebung des Schließelements in Richtung Dichtelement wird die der Flutstelle zugeführte Wachsmenge geregelt.

Nachteilig bei der im Stand der Technik beschriebenen Anlage ist, dass die Rohre und Schlauchleitungen zu den Flutstellen zusätzlich beheizt werden müssen, um ein Erstarren des Wachses in den Leitungen zu vermeiden. Ein weiterer Nachteil der im Stand der Technik erläuterten Lösung besteht darin, dass bei einer geschlossenen Ventilstellung das Wachs in den Rohrleitungen verbleibt. Damit besteht eine erhöhte Gefahr der Verstopfung der Rohrleitungen durch ein in den Rohrleitungen erhärtetes Wachs.

Der Erfindung liegt daher die Aufgabe zugrunde, eine kostengünstige Anordnung zur Konservierung von Bauteilen durch Aufbringen eines erhitzten Wachses zu schaffen, mit dem eine geregelte Zuführung des Wachses zu den Konservierungsstellen erfolgt und bei dem ein Verstopfen der Zuleitungen zu den Konservierungsstellen durch in den Rohrleitungen erhärtetes Wachs weitestgehend vermieden wird.

Diese Aufgabe wird durch eine Anordnung zur Konservierung von Bauteilen durch Aufbringen eines erhitzten Wachses mit den im Anspruch 1 genannten Merkmalen gelöst. Dadurch, dass das Steuerventil mit seiner Längsachse quer zu der als rohrförmige Ringleitung ausgebildeten Versorgungsleitung angeordnet ist und in koaxialer Anordnung zur Längsachse des Steuerventils jeweils einen linken Ventilkörper und einen rechten Ventilkörper aufweist, der durch die Wandung der Ringleitung in diese hineinragt und mit der Wandung der Ringleitung verbunden ist, wobei die Ventilkörper ein Schaltrohr jeweils beidseitig aufnehmen, das mit einer radialen Öffnung und einer dazu axial beabstandeten und radial versetzten Rückführöffnung versehen ist, und dass innerhalb des Schaltrohres drehbeweglich eine Schaltwelle gelagert ist, die mit einer koaxialen Bohrung versehen ist, in die eine radiale Bohrung und axial beabstandet und radial versetzt dazu eine Bohrung einmünden, und der linke Ventilkörper jeweils über eine Zuführöffnung mit einer Zuführleitung des Wachses und über die Bohrung und die verschließbare Rückführöffnung mit einer Rückführleitung des Wachses in Verbindung steht, und dass der rechte Ventilkörper mit einem Teil durch die Wand des Flutbeckens in dieses hineinragt und mit dem anderen Teil außerhalb des Flutbeckens angeordnet ist und die Schaltwelle an seinem außerhalb des Flutbeckens befindlichen Ende mit einer Verstelleinheit lösbar verbunden ist, wird mit einfachen Mitteln aus einer mit Heißwachs durchströmten Ringleitung ein mengenmäßig einstellbarer Volumenstrom entnommen und der Flutstelle zur Hohlraumkonservierung der Karosserieteile zugeführt. Nach Beendigung der Konservierungsarbeiten und Schließen der Heißwachszuführung zur Flutstelle wird das in der Rohrleitung zwischen Steuerventil und Flutstelle befindliche Wachs über eine an dem Steuerventil angeordnete Rückführleitung in das Flutbecken zurückgeführt. Somit werden Verstopfungen in den Rohrleitungen durch erstarrtes Wachs weitestgehend vermieden. Das hat zur Folge, dass die Rohrleitungen zwischen Steuerventil und Flutstelle nicht zusätzlich beheizt werden müssen. Der Aufwand und die Kosten der Anlage werden dadurch insgesamt reduziert. Durch die drehbeweglich angeordnete Schaltwelle in Verbindung mit der darin koaxial angeordneten Bohrung und der radialen Bohrung sowie mit der in dem Schaltrohr angeordneten Öffnung lässt sich problemlos die Durchflussmenge des Wachses stufenlos regeln.

Gemäß der Erfindung sind die Öffnung und die Rückführöffnung des Schaltrohres und die Bohrungen der Schaltwelle derart zueinander angeordnet, dass in einer relativen Winkellage der Schaltwelle zum Schaltrohr, bei der die Durchflussmenge des Wachses aus der Ringleitung durch die Öffnung des Schaltrohres und durch die Bohrung der Schaltwelle Null ist, in einer ersten Winkellage die Rückführöffnung des Schaltrohres verschlossen und in einer zweiten Winkellage die Rückführöffnung geöffnet ist. Dadurch wird erreicht, dass bei einer nur kurzzeitigen Unterbrechung der Durchflussmenge des Wachses durch das Steuerventil nicht in jedem Fall die Rückführöffnung geöffnet wird und somit das Wachs aus der Rohrleitung entfernt wird. Erst bei einer Weiterverdrehung der Schaltwelle in eine zweite Winkellage wird die Rückführöffnung geöffnet, so dass das in der Rohrleitung zwischen Steuerventil und Flutstelle befindliche Wachs über die Rückführöffnung und eine Rückführleitung abfließen kann. Die Materialverluste durch die Rückführung des Wachses bei geringen Unterbrechungen werden dadurch vermieden.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: einen Längsschnitt durch das Steuerventil der erfindungsgemäßen Anordnung;
- Figur 2: den Schnitt A-A gemäß Figur 1;
- Figur 3: einen Teilquerschnitt entsprechend der Ansicht Z gemäß Figur 1 und
- Figur 4: die erfindungsgemäße Anordnung in einer Hohlraumkonservierungsanlage.

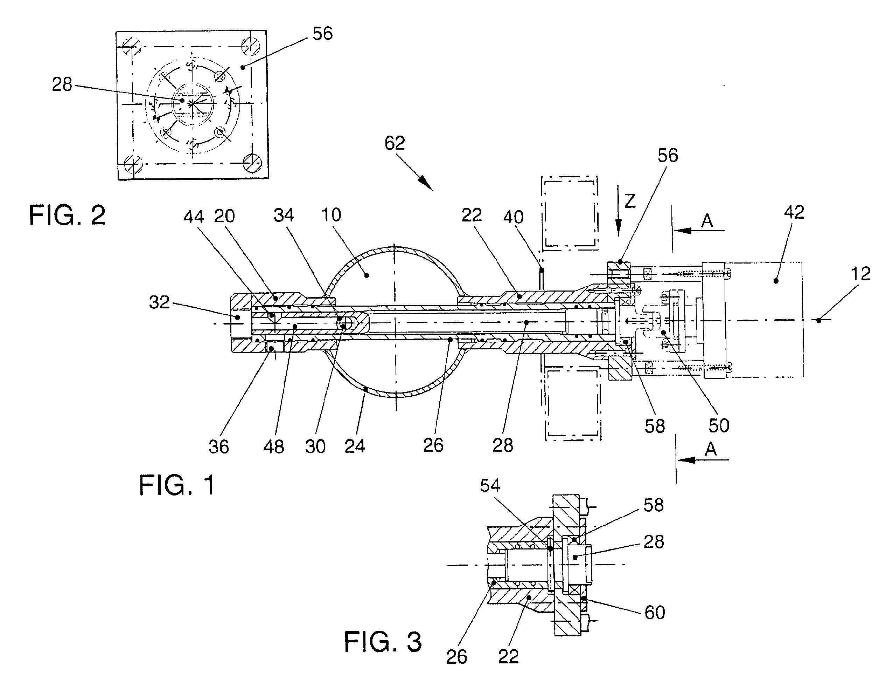

Das in Figur 1 dargestellte Steuerventil 62 zur regelbaren Zuführung eines Heißwachses aus einer Ringleitung 10 zu einer Flutstelle 18, bei der die Konservierung von Karosserieteilen 46 durch Aufbringen des erhitzten Wachses erfolgt, ist mit seiner Längsachse 12 quer zur rohrförmigen Ringleitung 10 angeordnet, so dass das Steuerventil 62 die Ringleitung 10 durchdringt. Das Steuerventil 62 besteht aus einem rechten Ventilkörper 22 und einem linken Ventilkörper 20, die koaxial zur Längsachse 12 des Steuerventils 62 angeordnet und durch ein Schaltrohr 26 miteinander verbunden sind. Der linke Ventilkörper 20 und der rechte Ventilkörper 22 ragt diametral durch die Wandung 24 der Ringleitung 10 in diese hinein und ist jeweils mit der Wandung 24 der Ringleitung 10 verbunden. Die Ventilkörper 20 und 22 sind rohrförmig ausgebildet, in die jeweils ein Ende des Schaltrohres 26 mündet. Das Schaltrohr 26 ist mit einer radialen Öffnung 30 versehen, die sich im Bereich innerhalb der Ringleitung 10 befindet. Zu der Öffnung 30 ist axial beabstandet und radial versetzt in dem Schaltrohr 26 eine Rückführöffnung 36 angeordnet. Die Rückführöffnung 36 in dem Schaltrohr 26 befindet sich in kongruenter Stellung mit der in dem linken Ventilkörper 20 angeordneten Rückführöffnung 36. Die Rückführöffnung 36 in dem linken Ventilkörper 20 und in dem Schaltrohr 26 sind außerhalb der Ringleitung 10 angeordnet.

Innerhalb des Schaltrohres 26 ist drehbeweglich eine Schaltwelle 28 gelagert, die im Bereich des linken Ventilkörpers 20 mit einer koaxialen Bohrung 48 versehen ist. In die koaxiale Bohrung 48 der Schaltwelle 28 münden sowohl eine radiale Bohrung 44 als auch axial beabstandet und radial versetzt dazu eine Bohrung 34 ein. Der axiale Abstand zwischen der Bohrung 44 und der Bohrung 34 ist gleich dem axialen Abstand zwischen der Rückführöffnung 36 und der Öffnung 33, so dass bei einer entsprechenden Verdrehung der Schaltwelle 28 in dem Schaltrohr 26 die Bohrung 44 und die Rückführöffnung 36 oder die Bohrung 34 und die Öffnung 30 übereinander liegen.

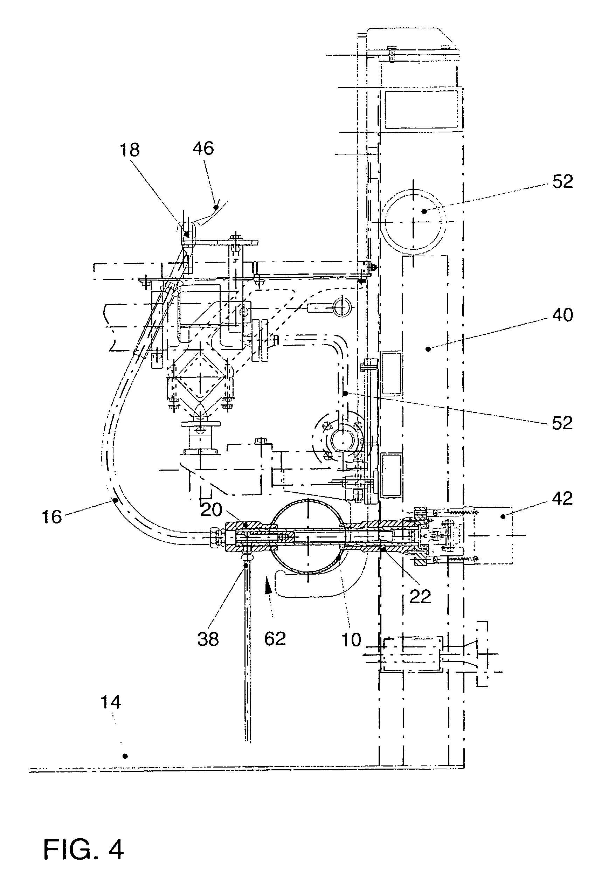

Der linke Ventilkörper 20 ist mit einer koaxialen Zuführöffnung 32 versehen, die einerseits mit der Bohrung 48 der Schaltwelle 28 und andererseits mit einer zur Flutstelle 18 führenden Zuführleitung 16 verbunden ist. Weiterhin ist aus der Figur 4 ersichtlich, dass in die Rückführöffnung 36 des linken Ventilkörpers 20 eine Rückführleitung 38 mündet, die oberhalb des Bodens eines Flutbeckens 14 endet. Die Wand 40 des Flutbeckens 14 ist mit einer Öffnung versehen, durch die ein Teil des rechten Ventilkörpers 22 geführt wird. Außerhalb des Flutbeckens 14 ist an der Stirnseite des rechten Ventilkörpers 22 an einer lösbaren Adapterplatte 56 eine lösbare Verstelleinheit 42 zur Verstellung der Schaltwelle 28 angeordnet. Die Verbindung der Verstelleinheit 42 mit der Schaltwelle 28 erfolgt über eine Kupplungsgabel 50. Es sind aber auch andere bekannte Verbindungen zwischen Schaltwelle 28 und Verstelleinheit 42 möglich.

In der Figur 2 ist die Verschraubung der Adapterplatte 56 mit der Stirnseite des rechten Ventilkörpers 22 dargestellt. In der Figur 3 ist die Lagerung der Schaltwelle 28 und die Fixierung des Schaltrohres 26 dargestellt. Die Lagerung und die Lagefixierung der drehbeweglichen Schaltwelle 28 erfolgt durch ein Axiallager 58 in Verbindung mit einer Befestigungsplatte 60, die über die Adapterplatte 56 an der Stirnseite des rechten Ventilkörpers 22 befestigt ist. Die Fixierung des Schaltrohres 26 erfolgt mittels eines in einer Querbohrung angeordneten Zylinderstiftes 54. Der Zylinderstift 54 sichert eine entsprechende Einbaulage des Schaltrohres 26 und verhindert eine Verdrehung des Schaltrohres 26 in dem Ventilkörpern 20 und 22. Aus der Figur 1 sind noch entsprechende Abdichtungen zwischen Schaltwelle 28 und Schaltrohr 26 sowie zwischen Schaltrohr 26 und den Ventilkörpern 20 und 22 zu erkennen.

Die Wirkungsweise des Steuerventils 62 der erfindungsgemäßen Anordnung zur Zuführung von zirka 120 °C warmem Heißwachs zu einer Flutstelle 18 zur Hohlraumkonservierung von Karosserieteilen 46 von Kraftfahrzeugen ist folgende:

Innerhalb eines Flutbeckens 14 ist eine Ringleitung 10 angeordnet, in der mittels nicht dargestellter Pumpen ein zirka 120 °C warmes Heißwachs gefördert wird. Die Befestigung der Ringleitung 10 erfolgt an der Innenwand 40 des Flutbeckens 14 über entsprechende Traversen. In den Wänden 40 des Flutbeckens 14 befinden sich Heizrohre 52, in denen Heißwasser zur Beheizung des Flutbeckeninnenraums 14 auf zirka 90 °C gefördert wird. Außerdem sind innerhalb des Flutbeckens 14 Heizrohre 52 angeordnet, die bei Bedarf die Flutstellen 18 ebenfalls zusätzlich beheizen. Durch die Erwärmung des Innenraums des Flutbeckens 14 wird ein Erstarren des Heißwachses in den zu den Flutstellen 18 führenden Zuführleitungen 16 vermieden. Ein zusätzliches Beheizen der Zuführungsleitungen 16 ist nicht erforderlich.

In dem Flutbecken 14 sind mehrere Flutstellen 18 zur Hohlraumkonservierung von Karosserieteilen 46 angeordnet. Entsprechend der Anzahl der jeweilig vorhandenen Flutstellen 18 sind in der Ringleitung 10 die entsprechenden Steuerventile 62 angeordnet. Die Betätigung der Steuerventile 62 erfolgt außerhalb des Flutbeckens 14 mittels der Verstelleinheit 42. Die Verstelleinheit 42 ist dabei ein pneumatisch oder elektrisch betriebener Stellmotor. Durch Betätigung der Verstelleinheit 42 erfolgt eine Veränderung der Winkellage der Schaltwelle 28 gegenüber dem Schaltrohr 26, wodurch die Öffnung 30 und die Rückführöffnung 36 im Schaltrohr 26 geöffnet oder verschlossen werden und somit ein geregelter Zu- und Ablauf des Heißwachses zum Steuerventil 62 erfolgt.

Zur Zuführung von Heißwachs zu der Flutstelle 18 muss das Steuerventil 62 geöffnet werden. Dieses erfolgt durch die Verstelleinheit 42, die die Schaltwelle 28 des Steuerventils 62 in die in Figur 1 gezeigte Flutstellung verstellt. In dieser Stellung liegt die Bohrung 34 der Schaltwelle 28 unter der Öffnung 30 des Schaltrohres 26. Dadurch gelangt das in der Ringleitung 10 mit einem entsprechenden Druck geförderte Heißwachs über den somit entstandenen freien Querschnitt in das Steuerventil 62. Durch Veränderung der relativen Winkellage der Schaltwelle 28 zum Schaltrohr 26 wird die Größe des freien Querschnitts zwischen der Bohrung 34 und der Öffnung 30 regelbar eingestellt. Durch die Einstellbarkeit der Größe des freien Querschnitts zwischen der Bohrung 34 und der Öffnung 30 kann die Durchflussmenge des Wachses von Null bis zu einem vorbestimmten Maximalwert stufenlos eingestellt werden. Bei der in der Figur 1 gezeigten Flutstellung ist die Rückführöffnung 36 des Schaltrohres 26 durch die Wandung der Schaltwelle 28 verschlossen. Das dem Steuerventil 62 zugeführte Heißwachs gelangt demnach über die koaxiale Bohrung 48 der Schaltwelle 28 und über die in dem linken Ventilkörper 20 befindlichen Zuführöffnung 32 in die Zuführleitung 16 und somit zu der Flutstelle 18, bei der die Hohlraumkonservierung der Karosserieteile erfolgt. Dabei ist die Flutstelle 18 für das Aufbringen des Wachses auf das zu konservierende Bauteil am Ende der Zuführleitung 16 als Flutdüse ausgebildet. Durch die Flutdüse werden insbesondere die Hohlräume der zu konservierenden Bauteile fast vollständig mit Heißwachs geflutet, so dass die zu konservierenden Flächen vollständig mit Heißwachs benetzt werden. Nach Beendigung des Flutvorganges erfolgt eine Entleerung der Hohlräume von dem nicht benötigten Heißwachs, das danach über das Flutbecken 14 dem System wieder zugeführt wird.

Nach Beendigung der entsprechenden Konservierungsarbeiten wird die Zufuhr des Heißwachses zur Flutstelle 18 unterbrochen. Dieses erfolgt ebenfalls wieder durch eine Veränderung der Winkellage der Schaltwelle 28 durch die Verstelleinheit 42. Durch Veränderung der relativen Winkellage der Schaltwelle 28 zum Schaltrohr 26 wird der freie

Querschnitt zwischen der Bohrung 34 der Schaltwelle 28 und der Öffnung 30 des Schaltrohres 26 geschlossen. Die Zuführung von Heißwachs aus der Ringleitung 10 zum Steuerventil 62 wird somit unterbrochen. Durch die Verdrehung der Schaltwelle um eine entsprechende Gradzahl wird die Bohrung 34 des Schaltrohres 26 durch die Wandung der Schaltwelle 28 verschlossen. Die relative Winkellage der Schaltwelle 28 zum Schaltrohr 26 kann dabei so eingestellt werden, dass in einer ersten Stellung die Rückführöffnung 36 des Schaltrohres 26 verschlossen und in einer zweiten Winkellage die Rückführöffnung 36 geöffnet ist.

In der ersten Stellung der Schaltwelle 28 ist sowohl die Bohrung 34 des Schaltrohres 26 als auch die Rückführöffnung 36 des Schaltrohres 26 durch die Wandung der Schaltwelle 28 verschlossen. Das bedeutet, dass bei unterbrochenem Förderstrom des Heißwachses zur Flutstelle 18 sich noch entsprechendes Heißwachs in der Zuführungsleitung 16 befindet. Diese Ventilstellung ist bei kurzzeitigen Unterbrechungen des Flutvorganges sinnvoll, bei der aufgrund der geringen Zeitdauer ein Erstarren des Wachses in der Zuführungsleitung 16 ausgeschlossen wird.

Bei längeren Unterbrechungen des Flutvorganges ist es erforderlich, das in den Zuführleitungen 16 befindliche Wachs zu entfernen, um somit ein Verstopfen der Zuführleitungen 16 durch erstarrtes Wachs zu verhindern. Durch Verstellung der Schaltwelle 28 in eine zweite Position, bei der die Bohrung 34 des Schaltrohres 26 durch die Wandung der Schaltwelle 28 verschlossen und sich die Rückführöffnung 36 in dem linken Ventilkörper 20 und in dem Schaltrohr 26 mit der in der Schaltwelle 28 angeordneten Bohrung 44 in kongruenter Stellung befinden, erfolgt ein Rücklaufen des in der Zuführleitung 16 befindlichen Wachses über die Bohrung 48, die Bohrung 44 und die Rückführöffnung 36 zur Rückführleitung 38. Das aus der Zuführleitung 16 abgeleitete Wachs gelangt über die Rückführleitung 38 in das Flutbecken 14 und wird dort gemeinsam mit dem bei dem Konserviervorgang abtropfenden Wachs einem Vorratsbehälter zugeführt.

Der Vorteil der erfindungsgemäßen Lösung besteht darin, dass bei einem längeren Stillstand des Flutvorganges problemlos das in den Zuleitungen befindliche Wachs entfernt werden kann. Leitungsverstopfungen durch erstarrtes Wachs werden dadurch vermieden. Die Zuleitungen zu den Flutstellen müssen nicht mehr zusätzlich beheizt werden. Dadurch werden die anfallenden Kosten reduziert. Außerdem werden die Materialverluste reduziert, da bei einem kurzzeitigen Stillstand die Zuleitungen nicht mehr geflutet werden müssen.

### BEZUGSZEICHENLISTE

- 10: Ringleitung
- 12: Längsachse
- 14: Flutbecken
- 16: Zuführleitung
- 18: Flutstelle
- 20: linker Ventilkörper
- 22: rechter Ventilkörper
- 24: Wandung
- 26: Schaltrohr
- 28: Schaltwelle
- 30: Öffnung
- 32: Zuführöffnung
- 34: Bohrung
- 36: Rückführöffnung
- 38: Rückführleitung
- 40: Wand
- 42: Verstelleinheit
- 44: Bohrung
- 46: Karosserieteil
- 48: Bohrung
- 50: Kupplungsgabel
- 52: Heizrohre
- 54: Zylinderstifte
- 56: Adapterplatte
- 58: Axiallager
- 60: Befestigungsplatte
- 62: Steuerventil

## Patentansprüche

1. Anordnung zur Konservierung von Bauteilen durch Aufbringen eines erhitzten Wachses, insbesondere für die Hohlraumkonservierung von Karosserieteilen (46) von Kraftfahrzeugen, mit einem in eine Versorgungsleitung integrierten Steuerventil (62), wobei der Zustrom des Wachses aus der Versorgungsleitung über das Steuerventil (62) zu einer Zuführleitung (16), die mit einer Flutstelle (18) in Verbindung steht, regelbar ist, **dadurch gekennzeichnet, dass** das Steuerventil (62) mit seiner Längsachse (12) quer der als rohrförmige Ringleitung (10) ausgebildeten Versorgungsleitung für das Wachs angeordnet ist und in koaxialer Anordnung zur Längsachse (12) des Steuerventils (62) jeweils einen linken Ventilkörper (20) und einen rechten Ventilkörper (22) aufweist, der jeweils durch die Wandung (24) der Ringleitung (10) in diese diametral hineinragt und mit der Wandung (24) der Ringleitung (10) verbunden ist, wobei die Ventilkörper (20, 22) ein Schaltrohr (26) jeweils beidseitig aufnehmen, das mit einer radialen Öffnung (30) und einer dazu axial beabstandeten und radial versetzten Rückführöffnung (36) versehen ist, und dass innerhalb des Schaltrohres (26) drehbeweglich eine Schaltwelle (28) gelagert ist, die mit einer koaxialen Bohrung (48) versehen ist, in die eine radiale Bohrung (44) und axial beabstandet und radial versetzt dazu eine Bohrung (34) einmünden, und der linke Ventilkörper (20) jeweils über eine Zuführöffnung (32) mit der Zuführleitung (16) des Wachses und über die Bohrung (48) und die verschließbare Rückführöffnung (36) mit einer Rückführleitung (38) des Wachses in Verbindung steht, wobei die Öffnung (30) und die Rückführöffnung (36) des Schaltrohres (26) und die Bohrung (34) und die Bohrung (44) der Schaltwelle (28) derart zueinander angeordnet sind, dass in einer relativen Winkellage der Schaltwelle (28) zum Schaltrohr (26), bei der die Durchflussmenge des Wachses aus der Ringleitung (10) durch die Öffnung (30) des Schaltrohres (26) und durch die Bohrung (34) der Schaltwelle (28) Null ist, in einer ersten Winkellage die Rückführöffnung (36) des Schaltrohres (26) verschlossen und in einer zweiten Winkellage die Rückführöffnung (36) geöffnet ist.

2. Anordnung nach Anspruch 1, **dadurch gekennzeichnet, dass** die Ringleitung (10) innerhalb eines beheizbaren Flutbeckens (14) angeordnet ist.

3. Anordnung nach einem der vorhergehenden Ansprüche, **dadurch gekennzeichnet, dass** das Wachs vorzugsweise eine Verarbeitungstemperatur von zirka 120 °C hat.

4. Anordnung nach einem der vorhergehenden Ansprüche, **dadurch gekennzeichnet, dass** die Öffnung (30) des Schaltrohres (26) und die Bohrung (34) der Schaltwelle (28) derart zueinander angeordnet sind, dass durch das Verändern der relativen Winkellage der Schaltwelle (28) zum Schaltrohr (26) die Durchflussmenge des Wachses in einem Bereich von Null bis zu einem vorbestimmbaren Maximalwert stufenlos regelbar ist.

5. Anordnung nach einem der vorhergehenden Ansprüche, **dadurch gekennzeichnet, dass** die Öffnung (30) und die Rückführöffnung (36) des Schaltrohres (26) und die Bohrung (34) und die Bohrung (44) der Schaltwelle (28) derart zueinander angeordnet sind, dass in der relativen Winkellage der Schaltwelle (28) zum Schaltrohr (26), bei der ein Durchfluss des Wachses aus der Ringleitung (10) durch die Öffnung (30) des Schaltrohres (26) und durch die Bohrung (34) der Schaltwelle (28) über die Bohrung (44) zur Zuführleitung (16) stattfindet, die Rückführöffnung (36) des Schaltrohres (26) durch die Wandung der Schaltwelle (28) verschlossen ist.

6. Anordnung nach Anspruch 5, **dadurch gekennzeichnet, dass** die Bohrung (34) des Schaltrohres (26) durch die Wandung der Schaltwelle (28) verschlossen wird.

7. Anordnung nach Anspruch 5 und 6, **dadurch gekennzeichnet, dass** in der ersten Winkellage der Schaltwelle (28) zum Schaltrohr (26) die Rückführöffnung (36) des Schaltrohres (26) durch die Wandung der Schaltwelle (28) verschlossen ist.

8. Anordnung nach Anspruch 5 und 6, **dadurch gekennzeichnet, dass** in der zweiten Winkellage der Schaltwelle (28) zum Schaltrohr (26) die in der Schaltwelle (28) angeordnete Bohrung (44) mit der in dem Schaltrohr (26) und mit der in dem linken Ventilkörper (20) angeordneten Rückführöffnung (36) in Verbindung steht.

9. Anordnung nach einem der vorhergehenden Ansprüche, **dadurch gekennzeichnet, dass** die Verstelleinheit (42) ein Stellmotor ist, durch den die relative Winkellage der Schaltwelle (26) zum Schaltrohr (28) veränderbar ist.

10. Anordnung nach einem der vorhergehenden Ansprüche, **dadurch gekennzeichnet, dass** die Flutstelle (18) für das Aufbringen des Wachses auf das zu konservierende Karosserieteil (46) am Ende der Zuführleitung (16) als Flutdüse ausgebildet ist.

11. Anordnung nach einem der vorhergehenden Ansprüche, **dadurch gekennzeichnet, dass** die radiale Öffnung (30) des Schaltrohres (26) und die radiale Bohrung (34) der Schaltwelle (28) innerhalb der Ringleitung (10) angeordnet sind.

## Claims

1. Arrangement for preserving components by applying a heated wax, in particular for the cavity preservation of body parts (46) of motor vehicles, having a control valve (62) which is integrated into a supply line, it being possible to regulate the inflow of wax from the supply line via the control valve (62) to a feed line (16) which is connected to a flood point (18), **characterized in that** the longitudinal axis (12) of the control valve (62) is arranged transversely with respect to the supply line for the wax, which supply line is configured as a tubular annular line (10), and the said control valve (62) has in each case a left-hand valve body (20) and a right-hand valve body (22) in a coaxial arrangement with respect to the longitudinal axis (12) of the control valve (62), which valve body (20; 22) protrudes diametrically in each case through the wall (24) of the annular line (10) into the latter and is connected to the wall (24) of the annular line (10), the valve bodies (20, 22) accommodating a switching tube (26) in each case on both sides which is provided with a radial opening (30) and a return opening (36) which is axially spaced apart from and radially offset from the former, and **in that** a switching shaft (28) is mounted within the switching tube (26) such that it can move rotationally, which switching shaft (28) is provided with a coaxial hole (48), into which a radial hole (44) and, axially spaced apart and radially offset therefrom, a hole (34) open, and the left-hand valve body (20) is connected in each case via a feed opening (32) to the feed line (16) of the wax and via the hole (48) and the closable return opening (36) to a return line (38) of the wax, the opening (30) and the return opening (36) of the switching tube (26) and the hole (34) and the hole (44) of the switching shaft (28) being arranged with respect to one another in such a way that, in an angular position of the switching shaft (28) relative to the switching tube (26), in which the throughflow amount of the wax from the annular line (10) through the opening (30) of the switching tube (26) and through the hole (34) of the switching shaft (28) is zero, the return opening (36) of the switching tube (26) is closed in a first angular position and the return opening (36) is open in a second angular position.

2. Arrangement according to Claim 1, **characterized in that** the annular line (10) is arranged within a heatable flood basin (14).

3. Arrangement according to one of the preceding claims, **characterized in that** the wax preferably has a processing temperature of approximately 120°C.

4. Arrangement according to one of the preceding claims, **characterized in that** the opening (30) of the switching tube (26) and the hole (34) of the switching shaft (28) are arranged with respect to one another in such a way that the throughflow amount of the wax can be regulated in an infinitely variable manner in a range from zero to a predefinable maximum value by changing the angular position of the switching shaft (28) relative to the switching tube (26).

5. Arrangement according to one of the preceding claims, **characterized in that** the opening (30) and the return opening (36) of the switching tube (26) and the hole (34) and the hole (44) of the switching shaft (28) are arranged with respect to one another in such a way that, in the angular position of the switching shaft (28) relative to the switching tube (26), in which a throughflow of the wax takes place out of the annular line (10) through the opening (30) of the switching tube (26) and through the hole (34) of the switching shaft (28) via the hole (44) to the feed line (16), the return opening (36) of the switching tube (26) is closed by the wall of the switching shaft (28).

6. Arrangement according to Claim 5, **characterized in that** the hole (34) of the switching tube (26) is closed by the wall of the switching shaft (28).

7. Arrangement according to Claims 5 and 6, **characterized in that**, in the first angular position of the switching shaft (28) with respect to the switching tube (26), the return opening (36) of the switching tube (26) is closed by the wall of the switching shaft (28).

8. Arrangement according to Claims 5 and 6, **characterized in that**, in the second angular position of the switching shaft (28) with respect to the switching tube (26), the hole (44) which is arranged in the switching shaft (28) is connected to the return opening (36) which is arranged in the switching tube (26) and to the return opening (36) which is arranged in the left-hand valve body (20).

9. Arrangement according to one of the preceding claims, **characterized in that** the adjusting unit (42) is an actuating motor, by way of which the angular position of the switching shaft (26) relative to the switching tube (28) can be changed.

10. Arrangement according to one of the preceding claims, **characterized in that** the flood point (18) for the application of the wax onto the body part (46) which is to be preserved is formed as a flood nozzle at the end of the feed line (16).

11. Arrangement according to one of the preceding claims, **characterized in that** the radial opening (30) of the switching tube (26) and the radial hole (34) of the switching shaft (28) are arranged within the annular line (10).

## Revendications

1. Ensemble pour la conservation de composants par l'application d'une cire chaude, notamment pour la conservation dans un espace creux de pièces de carrosserie (46) de véhicules automobiles, comprenant une soupape de commande (62) intégrée dans une conduite d'alimentation, l'afflux de la cire hors de la conduite d'alimentation pouvant être régulé par le biais de la soupape de commande (62) vers une conduite d'amenée (16) qui est en liaison avec un point d'efflux (18), **caractérisé en ce que** la soupape de commande (62) est disposée avec son axe longitudinal (12) transversalement à la conduite d'alimentation pour la cire réalisée sous forme de conduite annulaire tubulaire (10) et présente, dans un arrangement coaxial avec l'axe longitudinal (12) de la soupape de commande (62), un corps de soupape gauche respectif (20) et un corps de soupape droit respectif (22), lequel pénètre diamétralement à travers la paroi (24) de la conduite annulaire (10) à l'intérieur de cette dernière et est connecté à la paroi (24) de la conduite annulaire (10), les corps de soupape (20, 22) recevant à chaque fois de part et d'autre un tube de commutation (26) qui est pourvu d'une ouverture radiale (30) et d'une ouverture de retour (36) espacée axialement de celle-ci et décalée radialement, et **en ce qu'**à l'intérieur du tube de commutation (26) est montée une tige de commutation (28) mobile en rotation, qui est pourvue d'un alésage coaxial (48) dans lequel débouchent un alésage radial (44) et espacé axialement et décalé radialement par rapport à lui, un alésage (34), et le corps de soupape gauche (20) étant à chaque fois en liaison par le biais d'une ouverture d'amenée (32) avec la conduite d'amenée (16) de la cire et par le biais de l'alésage (48) et de l'ouverture de retour refermable (36) avec une conduite de retour (38) de la cire, l'ouverture (30) et l'ouverture de retour (36) du tube de commutation (26) et l'alésage (34) et l'alésage (44) de la tige de commutation (28) étant disposés les uns par rapport aux autres de telle sorte que dans une position angulaire relative de la tige de commutation (28) par rapport au tube de commutation (26), dans laquelle la quantité d'afflux de la cire provenant de la conduite annulaire (10) à travers l'ouverture (30) du tube de commutation (26) et à travers l'alésage (34) de la tige de commutation (28) est nulle, dans une première position angulaire, l'ouverture de retour (36) du tube de commutation (26) soit fermée, et dans une deuxième position angulaire, l'ouverture de retour (36) soit ouverte.

2. Ensemble selon la revendication 1, **caractérisé en ce que** la conduite annulaire (10) est disposée à l'intérieur d'un bassin d'efflux chauffable (14).

3. Ensemble selon l'une quelconque des revendications précédentes, **caractérisé en ce que** la cire a de préférence une température de traitement d'environ 120°C.

4. Ensemble selon l'une quelconque des revendications précédentes, **caractérisé en ce que** l'ouverture (30) du tube de commutation (26) et l'alésage (34) de la tige de commutation (28) sont disposés l'un par rapport à l'autre de telle sorte que par modification de la position angulaire relative de la tige de commutation (28) par rapport au tube de commutation (26), la quantité d'afflux de la cire puisse être régulée en continu dans une plage de zéro à une valeur maximale prédéfinissable.

5. Ensemble selon l'une quelconque des revendications précédentes, **caractérisé en ce que** l'ouverture (30) et l'ouverture de retour (36) du tube de commutation (26) et l'alésage (34) et l'alésage (44) de la tige de commutation (28) sont disposés les uns par rapport aux autres de telle sorte que dans la position angulaire relative de la tige de commutation (28) par rapport au tube de commutation (26), dans laquelle un afflux de la cire provenant de la conduite annulaire (10) à travers l'ouverture (30) du tube de commutation (26) et à travers l'alésage (34) de la tige de commutation (28) a lieu par le biais de l'alésage (44) vers la conduite d'amenée (16), l'ouverture de retour (36) du tube de commutation (26) est fermée par la paroi de la tige de commutation (28).

6. Ensemble selon la revendication 5, **caractérisé en ce que** l'alésage (34) du tube de commutation (26) est fermé par la paroi de la tige de commutation (28).

7. Ensemble selon la revendication 5 et la revendication 6, **caractérisé en ce que** dans la première position angulaire de la tige de commutation (28) par rapport au tube de commutation (26), l'ouverture de retour (36) du tube de commutation (26) est fermée par la paroi de la tige de commutation (28).

8. Ensemble selon la revendication 5 et la revendication 6, **caractérisé en ce que** dans la deuxième position angulaire de la tige de commutation (28) par rapport au tube de commutation (26), l'alésage (44) disposé dans la tige de commutation (28) est en liaison avec l'ouverture de retour (36) disposée dans le tube de commutation (26) et dans le corps de soupape gauche (20).

9. Ensemble selon l'une quelconque des revendications précédentes, **caractérisé en ce que** l'unité de réglage (42) est un moteur de réglage qui peut varier la position angulaire relative de la tige de commutation (26) par rapport au tube de commutation (28).

10. Ensemble selon l'une quelconque des revendications précédentes, **caractérisé en ce que** le point d'efflux (18) pour l'application d'une cire sur la pièce de carrosserie (46) à conserver est réalisé à l'extrémité de la conduite d'amenée (16) sous forme de buse d'efflux.

11. Ensemble selon l'une quelconque des revendications précédentes, **caractérisé en ce que** l'ouverture radiale (30) du tube de commutation (26) et l'alésage radial (34) de la tige de commutation (28) sont disposés à l'intérieur de la conduite annulaire (10).
